# EUROPÄISCHE PATENTSCHRIFT

(11) **EP 0 711 788 B1**
(45) Veröffentlichungstag und Bekanntmachung des Hinweises auf die Patenterteilung: **28.01.1998**
(21) Anmeldenummer: 95117063.8
(22) Anmeldetag: 30.10.1995
(51) Int. Cl.: C08F 8/00, C08F 214/18

(54) **Reaktive Fluorpolymere, ein Verfahren zur Herstellung, ein Verfahren zur Herstellung von vernetzten, bepfropften oder modifizierten Fluorpolymeren und deren Verwendung**
Reactive fluoropolymers, process for their manufacture, process for the manufacture of crosslinked, grafted or modified fluoropolymers and use thereof
Polymères fluorés réactifs, leur procédé de préparation, procédé de préparation de polymères fluorés réticulés, greffés ou modifiés et leur application

(30) Priorität: 10.11.1994 DE 4440201
(43) Veröffentlichungstag der Anmeldung: 15.05.1996
(73) Patentinhaber: BAYER AG, 51368 Leverkusen (DE)
(72) Erfinder: Krüger, Ralf, Dr., D-51061 Köln (DE); Harrison, David, Dr., D-51061 Köln (DE); Wrobel, Dieter, Dr., D-51375 Leverkusen (DE)

(56) Entgegenhaltungen:
- EP-A- 0 150 953
- EP-A- 0 437 619
- EP-A- 0 489 314
- EP-A- 0 507 468
- EP-A- 0 514 674
- DE-A- 1 299 873
- FR-A- 2 358 424
- GB-A- 653 936

## Beschreibung

Die vorliegende Erfindung betrifft reaktive und verarbeitbare Fluorpolymere, ein Verfahren zu deren Herstellung, ein Verfahren zur Herstellung von vernetzten, bepfropften oder modifizierten Fluorpolymeren unter Einsatz der reaktiven und verarbeitbaren Fluorpolymere und deren Verwendung.

Fluorpolymere werden in der Technik immer dann eingesetzt, wenn besondere Eigenschaften, wie niedrige Oberflächenspannung oder hohe Temperatur-, Chemikalien- sowie Lösungsmittelbeständigkeit verlangt werden. Für die Verwendung auf dem Fluorelastomergebiet müssen die Fluorkautschuke nach der Formgebung vernetzt werden.

Die gebräuchlichsten Vernetzungstypen für Fluorkautschuke sind die bisphenolische bzw. bisaminische und die peroxidische Vernetzung. Peroxidisch vernetzte Fluorkautschuke bieten im Vergleich zu aminisch oder bisphenolisch vernetzten eine höhere Beständigkeit gegenüber Säuren, Basen, Wasserdampf und in Kraftfahrzeugen verwendeten Ölen, die aggressive nucleophile Additive enthalten (Ullmann's Encyclopedia of Industrial Chemistry, 5. Auflage, 1993, Vol. A 23, Chapter 2.6, S. 265-269).

Während eine aus den Monomerbausteinen Vinylidenfluorid (VDF), Hexafluorpropen (HFP) und gegebenenfalls Tetrafluorethylen (TFF) bestehende Copolymerkette durch Amine oder Bisphenole in Gegenwart geeigneter Katalysatoren direkt angegriffen werden kann, und Vernetzungsbrücken nach vorheriger HF-Eliminierung an den besonders exponierten HFP-VDF-HFP-Sequenzen geschaffen werden können, lassen sich wegen der hohen Bindungsenergien im fluorierten Polymerrückgrat keine Vernetzungsreaktionen durch Radikale einleiten.

Eine durch Radikale eingeleitete (peroxidische) Vernetzung an solchen Fluorkautschuken mit Fluorgehalten > 60% ist nur möglich, wenn diese entsprechende Reaktivgruppen (Cure-sites) enthalten. Dabei handelt es sich hauptsächlich um Brom und/oder Iod-Substituenten, die kovalent an die Polymerkette gebunden sind. Die Einführung in die Polymerkette geschieht entweder durch Copolymerisation mit Brom-haltigen Monomeren, im einfachsten Fall mit Bromtrifluorethylen, oder durch Regelung mit Verbindungen, die Iod oder Iod und Brom, z.B. 1,2-Diiodethan, 1-Brom-2-iodethan enthalten. Während der nachfolgenden Vernetzung können die Brom- oder Iodsubstituenten leicht abstrahiert werden und an den dabei resultierenden Radikalstellen mittels Covernetzer Vernetzungsbrücken geschaffen werden. Hier bleibt das fluorierte Rückgrat zwar unbeschädigt und damit stabiler als bei einem bisphenolisch vernetzten Fluorkautschuk, es treten aber während der Vulkanisation toxische Spaltprodukte wie Methylbromid oder -iodid auf, die aus der Sicht der Arbeitsplatzhygiene als bedenklich gelten und zudem Probleme bezüglich Formverschmutzung und Metallhaftung bereiten. Einerseits erfordert es zusätzlichen Aufwand, diese teuren Cure-sites einzuführen, andererseits werden die Halogensubstituenten während der Vulkanisation wieder abgespalten und sind somit kein Bestandteil der Vernetzungsbrücken.

In EP 489 314 und EP 514 674 werden unvernetzte Copolymerisate aus Fluormonomeren und bi- oder trifunktionellen Monomeren offenbart, die freie Doppelbindungen enthalten und dadurch radikalisch vernetzbar sind. Diese besitzen gegenüber den Iod/Brom-haltigen Fluorkautschuken den Vorteil, daß sie kein Alkylhalogenid während der Vulkanisation freisetzen und Vulkanisate mit hohen Dehnungen und Festigkeiten resultieren. Das bi- oder trifunktionelle Monomer wird in diesen Fällen durch Copolymerisation in wäßriger Dispersion (Emulsionspolymerisation) in die Fluorpolymerkette eingeführt.

Bedingt durch die chemische Natur der multifunktionellen Cure-site-Monomere bereitet die Copolymerisation mit den Fluormonomeren einige Probleme. Die in Frage kommenden Verbindungen üben häufig einen retardierenden Einfluß auf die Polymerisation aus, z.B. durch eine abbrechende Allylwasserstoffübertragung bei Einsatz von Triallylisocyanurat als trifunktionelles Cure-site-Monomer. Zudem können an den polymergebundenen seitenständigen Doppelbindungen Folgereaktionen (Verzweigungen bis hin zur Vernetzung) stattfinden, die zum Aufbau unerwünscht hoher Molekulargewichte führen, was sich negativ auf die Verarbeitungseigenschaften auswirkt. Alles in allem erfordert dieser Weg schwierig zu handhabende Polymerisationsbedingungen.

Aufgabe der vorliegenden Erfindung war daher die Bereitstellung verarbeitbarer und reaktiver, d.h. zum Beispiel radikalisch vernetzbarer Fluorpolymere, die über seitenständige Doppelbindungen verfügen, die gute Verarbeitungseigenschaften, wie Fließfähigkeit, Entformbarkeit oder durch Formverschmutzung sowie gute mechanische und Alterungseigenschaften im vernetzten Zustand aufweisen.

Überraschenderweise wurde nun gefunden, daß die erfindungsgemäßen Fluorpolymere, die über mechanische Scherung von Fluorpolymeren, die keine Reaktivgruppen enthalten, in Gegenwart von Verbindungen, die
- eine zur Addition an polymere Radikalbruchstücke befähigte Doppelbindung (I) sowie
- Π-Elektronensysteme, die entweder selbst in Konjugation zu der Doppelbindung (I) stehen oder in Allyl- oder Benzylstellung leicht übertragbare Wasserstoffatome besitzen sowie
- gegebenenfalls weitere Doppelbindungen oder reaktive Gruppen besitzen,
hergestellt wurden, eine sehr gute Reaktivität aufweisen, d.h. sowohl vernetzt, bepfropft oder durch weitere polymeranaloge Umsetzungen modifiziert werden können und auch gut verarbeitbar sind.

Zudem sind die für die mechanische Scherung einzusetzenden Fluorpolymere, die keine Reaktivgruppen enthalten, einfach herstellbar, da keine Cure-site-Einheiten eingeführt werden müssen und auf eine Molekulargewichtsregelung verzichtet werden kann, was Vorteile hinsichtlich der Prozeßführung und Vereinfachungen bei der Aufarbeitung sowie der Abwasser- bzw. Abluftbehandlung bringt.

Gegenstand der vorliegenden Erfindung sind daher reaktive und verarbeitbare Fluorpolymere, erhältlich durch mechanische Scherung von
- Fluorpolymeren A), die aus polymerisierten Monomereinheiten von
   ein oder mehreren fluorierten, gegebenenfalls substituierten Alkenen mit 2 bis 8 Kohlenstoffatomen und gegebenenfalls
   perfluorierten Vinylethern, nicht fluorierten Olefinen und/oder nicht fluorierten Vinylestern bestehen und
- 0,3 bis 7 % von Verbindungen B), die
   - eine zur Addition an polymere Radikalbruchstücke befähigte Doppelbindung (I) sowie
   - Π-Elektronensysteme, die entweder selbst in Konjugation zu der Doppelbindung (I) stehen oder in Allyl- oder Benzylstellung leicht übertragbare Wasserstoffatome besitzen sowie
   - gegebenenfalls weitere Doppelbindungen oder reaktive Gruppen besitzen und
- gegebenenfalls weiteren Hilfsstoffen (C).

Die im Sinne der Erfindung zum Einsatz gelangenden Fluorpolymere A) werden durch radikalische Polymerisation einer oder mehrerer Fluromonomere gegebenenfalls in Kombination mit nichtfluorhaltigen Monomeren hergestellt, wobei es sich vorzugsweise um fluorierte, gegebenenfalls substituierte Ethylene, die neben Fluor Wasserstoff und/oder Chlor tragen, wie z.B. Vinylidenfluorid, Tetrafluorethylen und Chlortrifluorethylen, um fluorierte 1-Alkene mit 2-8 Kohlenstoffatomen, wie z.B. Hexafluorpropen, 3,3,3-Trifluorpropen, Chlorpentafluorpropen, Hexafluorisobuten, um perfluorierte Vinylether der Formel CF₂=CF-O-X mit X=C₁-C₃-Perfluoralkyl oder -(CF₂-CFY-O-)ₙR_{F}, wobei n=1-4, Y=F oder CF₃ und R_{F}=C₁-C₃-Perfluoralkyl bedeuten, sowie nichtfluorierte, lineare oder verzweigte, acyclische oder cyclische Olefine, wie z.B. Ethylen, Propen, Isobuten oder Vinylester, z.B. Vinylacetat, handelt. Für Fluorkautschukkombinationen ist es notwendig, daß das Polymer neben den fluorierten Ethylenen genügend Vinylverbindungen, wie z.B. fluorierte Propene, Ether etc., gleichmäßig über alle Polymerketten verteilt enthält, so daß die Kristallisation wirksam unterdrückt wird. In der Regel sind dies > 14 Mol-%. Besonders bevorzugt sind Fluorkautschukcopolymere, die sich aus Vinylidenfluorid (CF₂=CH₂), Hexafluorpropen (CF₂=CF-CF₃) sowie gegebenenfalls Tetrafluorethylen (CF₂= CF₂) und/oder perfluorierten Vinylethern, wie z.B. Perfluor-(methyl-vinyl-ether), zusammensetzen. Die Fluorpolymere A) zeichnen sich durch eine Molekulargewichtsverteilung in der Gestalt aus, daß die durch gelchromatographische Analyse (GPC) bestimmten M₁₀-Werte (= mittleres Molekulargewicht der letzten 10 % des Eluats, d.h. der niedermolekularsten Fraktion) >50 kg/Mol sind.

Die gelchromatographische Analyse wurde durch die gekoppelten Methoden von GPC und Viskosimetrie an einer Säulenkombination für M = 10³ - 5 x 10⁷ g/mol in DMF unter Zusatz von 1 g/l LiBr bei 35°C und Auswertung mittels einer universellen Eichkurve nach BENOIT durchgeführt.

In einer Ausführungsform der vorliegenden Erfindung ist das Fluorpolymer A) ein Kautschuk mit M₁₀ >50 kg/Mol, besonders bevorzugt M₁₀ >100 kg/Mol.

Ionische Endgruppen an den Fluorpolymeren A) führen zu einer hohen Ausbeute an Reaktivgruppen während der mechanischen Scherung, ohne daß dabei die Fließfähigkeit der resultierenden reaktiven und verarbeitbaren Fluorpolymere bei den für die Formgebung üblichen Verarbeitungstemperaturen (>100°C) negativ beeinträchtigt wird.

Bevorzugt sind Carboxylatendgruppen, die z.B. durch das Initiatorsystem Permanganat/Oxalat eingeführt werden können.

Die im Sinne der Erfindung zum Einsatz gelangende Verbindung B) ist eine Verbindung, die eine zur Addition an ein polymeres Radikalbruchstück befähigte Doppelbindung (I) besitzt.

Dies kann jede in 1-, 1,1- oder 1,2-Stellung substituierte Kohlenstoff-Kohlenstoff-Doppelbindung sein, soweit deren Reaktivität gegenüber Radikalen nicht durch elektronische oder sterische Einflüsse beeinträchtigt ist. Desweiteren besitzen die Verbindungen B) Π-Elektronensysteme, die entweder selbst in Konjugation zu der Doppelbindung (I) stehen oder in Alkyl- oder Benzylstellung leicht übertragbare Wasserstoffatome besitzen. Π-Elektronensysteme sind aromatische, olefinische oder neben Kohlenstoff Heteroatome enthaltende Doppelbindungen.

Besonders bevorzugt sind Verbindungen aus der Gruppe

R^{1a}R²C=CR^{1b}-CH₂-Z(R³ ₚR⁴ ₘR⁵ ₙ) (1)

R^{1a}R²C=CR^{1b}-Z(R³ ₚR⁴ ₘR⁵ ₙ) (2)

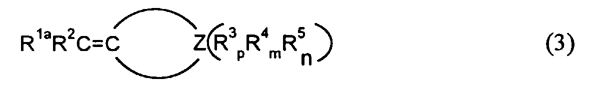

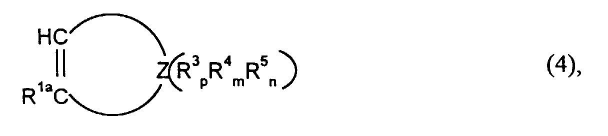

die einzeln oder im Gemisch vorliegen können,
wobei
R^{1a} und R ^{1b} unabhängig voneinander H, F, oder C₁-C₆-Alkyl-Resten,
R² H oder F, entsprechen;
Z ein acyclischer oder cyclischer aliphatischer oder aromatischer organischer oder anorganischer Rest ist, der als R³R⁴R⁵ weitere olefinische Doppelbindungen und/oder reaktive Gruppen, wie z.B. Pentafluorphenyl, -CF₂-CN, -OH, Säuregruppen und deren Derivate trägt,
wobei p, m und n Zahlenwerte von 0 bis 3 annehmen können und
die Summe aus p + m + n maximal 3 beträgt und R³, R⁴ und R⁵ voneinander verschieden oder gleich sein können,
entsprechen.

Vorzugsweise ist Komponente B) ein Di- oder Triallyl- bzw. methallylester mehrwertiger organischer oder anorganischer Säuren, wie z.B. Alkenyl-cyanurate oder -isocyanurate, wie Triallylcyanurat bzw. -isocyanurat oder Trimethallyl-isocyanurat, Diallylphthallat, Triallylphosphat, Triallylcitrat, Triallylmellitat, Trimethyltriallyl-cyclotrisiloxan und/oder Di- oder Triallyl- bzw. -methallylether zwei- oder dreiwertiger Alkohole inclusive Acetale, wie z.B. Trimethylolpropan-trimethallylether und/oder acyclische und cyclische Di- oder Triene, wie z.B. 1,4- bzw. 1,5-Hexadien oder 1,4-Pentadien, Myrcen, Limonen, Norbornadien, Ethylidennorbornen, Dicyclopentadien, und/oder Verbindungen, die neben einer oder mehreren Doppelbindungen gespannte Ringe enthalten, wie z.B. α-Pinen oder Norbornen und/oder am Phenylring substituierte Styrol- oder α-Methylstyrolderivate, wie z.B. p-Isopropenyl-phenylacetat und Pentafluorstyrol.

Besonders bevorzugt sind solche Verbindungen B), die mehrere olefinische Doppelbindungen enthalten und nach der Addition an die Polymerkette noch mindestens eine übrigbehalten. In besonders bevorzugter Weise ist Verbindung B) eine Kombination aus Triallylisocyanurat oder Triallylcyanurat mit Trimethallylisocyanurat und/oder α-Pinen und/oder Limonen und/oder Myrcen und/oder Ethylidennorbornen.

Der Molekulargewichtsabbau während der Scherung von Fluorpolymeren A) in Gegenwart von Verbindungen B) kann gegebenenfalls durch Zugabe von Verbindungen C) gefördert werden.

In einer Ausführungsform der vorliegenden Erfindung enthält daher das reaktive und verarbeitbare Fluorpolymer neben den Verbindungen A) und B) noch Hilfsstoffe C), die vorzugsweise leicht oxydierbare hydroxy- und carboxygruppenhaltige organische Verbindungen, wie z.B. Oxalsäure, Bernsteinsäure, Apfelsäure, Weinsäure, Zitronensäure, Ascorbinsäure, Folsäure sowie Glycol, Glycerin, klassische Mastizierhilfsmittel, wie z.B. Pentachlorthiophenol, dessen Zinksalz oder 2,2'-Dibenzamido-diphenyldisulfid sowie als Sauerstoffüberträger wirkende Eisen-, Kupfer-, Kobalt-, Nickel- oder Cromkomplexe des Phthalocyanins oder Acetylacetonats, iod- und/oder bromhaltige Verbindungen, Alterungsschutzmittel oder Radikalinhibitoren, wie z.B. substituierte aromatische Amine, Phenole bzw. Chinone, z.B. Benzochinon, Pyrogallol (2,3-Dihydroxyphenol), 1,5-Di-t-butyl-p-kresol oder N-substituierte p-Phenylendiamine oder Gemische daraus, sind.

Bevorzugte Hilfsstoffe C) sind Oxalsäure, Bernsteinsäure, Apfelsäure, Weinsäure, Zitronensäure, Ascorbinsäure, Folsäure sowie Glvcol. Glvcerin Pentachlorthiophenol, dessen Zinksalz oder 2,2'-Dibenzamido-diphenyldisulfid sowie Eisen-, Kupfer-, Kobalt-, Nickel- oder Chromkomplexe des Phthalocyanins oder Acetylacetonats, Benzochinon, Pyrogallol (2,3-Dihydroxyphenol), 1,5-Di-t-butyl-p-kresol oder N-substituierte p-Phenylendiamine oder Gemische daraus.

Die reaktiven und verarbeitbaren Fluorpolymere enthalten vorzugsweise 0,1 bis 5 Teile Hilfsstoffe C) pro 100 Teile Fluorpolymer A).

Die reaktiven und verarbeitbaren Fluorpolymere besitzen vorzugsweise gegenüber den Fluorpolymeren A) ein um mindestens 1/3 verringertes Gewichtsmittel der Molekulargewichte.

Gegenstand der vorliegenden Erfindung ist auch ein Verfahren zur Herstellung reaktiver und verarbeitbarer Fluorpolymere, wonach die Fluorpolymere A) mit mindestens einer Verbindung B) und gegebenenfalls Verbindungen C) unter dem Einfluß mechanischer Scherung umgesetzt werden.

Für die in dem erfindungsgemäßen Verfahren durchgeführte Scherung können alle bekannten Mischaggregate, wie z.B. Zweiwalzenmischwerk, Stempelkneter, Brabendermischer, Doppelwellenextruder usw. genutzt werden.

Die Verarbeitungstemperatur hängt vom Aggregat und von der Ausgangsviskosität des Fluorpolymers ab. Sie sollte möglichst tief aber oberhalb der Glastemperatur des entsprechenden Fluorpolymers A) liegen.

In den erfindungsgemäßen Verfahren liegt die Verarbeitungstemperatur vorzugsweise oberhalb der Glastemperatur des Fluorpolymers A) und die Scherdauer beträgt ≥ 1 min.

Bei Fluorkautschuken sollte die Anfangstemperatur bei Anwendung eines geschlossenen Aggregats 120°C nicht übersteigen und mit zunehmendem Abbau sowie in Abhängigkeit von der gewünschten Endviskosität sukzessive abgesenkt werden. Bei Verarbeitung auf einem Zweiwalzenmischwerk mit einer Friktion von mindestens 1,1:1 kann die Massetemperatur von Kautschuken unter 60°C gehalten werden. Die Verweilzeiten im Scherfeld hängen ebenso vom Aggregattyp ab und liegen bei hoher Scherung bei wenigen Minuten (2-5min) und können bei geringerer Scherung bis zu 60 min betragen.

Die dabei resultierenden modifizierten Fluorpolymere enthalten chemisch gebunden seiten- und/oder endständige Reaktivgruppen, bevorzugt olefinische Doppelbindungen, und können gegenüber den Ausgangspolymeren um 1/3 verringerte Molekulargewichte (Mw) besitzen.

Gegenstand der vorliegenden Erfindung ist zudem ein Verfahren zur Herstellung von vernetzten, bepfropften oder modifizierten Fluorpolymeren, wonach die erfindungsgemäßen reaktiven und verarbeitbaren Fluorpolymere in radikalischer Additions-, nucleophilen oder elektrophilen Substitutions- oder Additionsreaktionen eingesetzt werden.

In Abhängigkeit von der chemischen Natur der eingeführten Reaktivgruppen werden zur Vernetzung, Pfropfung oder Modifizierung niedermolekulare, oligomere oder polymere Verbindungen benötigt, die entsprechende funktionelle Gruppen enthalten. So können die erfindungsgemäßen Fluorpolymere für den Fall, daß es sich bei den eingeführten Reaktivgruppen um Pentafluorphenyl- oder Säuregruppen bzw. deren Derivate handelt, mit Nucleophilen oder Bisnucleophilen, wie beispielsweise 2,2-Bis-(4-hydroxyphenyl)-propan oder Hexamethylendiamin, umgesetzt werden. Für den bevorzugten Fall, daß die erfindungsgemäßen Fluorpolymere seiten- oder endständige olefinische Doppelbindungen enthalten, können diese auf radikalischem Wege, durch Strahlung oder radikalbildende Substanzen, wie organische Peroxide, oder durch spezielle Mechanismen, wie beispielsweise SiH-Addition, gepfropft oder vernetzt werden. Für den besonderen Fall, daß es sich bei den Fluorpolymeren um Kautschuke handelt, können diese mit den bei einer peroxidischen Vulkanisation üblichen Mischungsbestandteilen, wie Füllstoffe, Säureakzeptoren, Covernetzer und Peroxid, nach bekannten Methoden compoundiert und im Anschluß an die Formgebung vulkanisiert werden. Die erfindungsgemäßen Vulkanisationsmischungen zeichnen sich durch geringe Klebrigkeit und Formverschmutzung aus. Es resultieren homogene Netzwerke, welche die Grundlage für geringe Druck- oder Zugverformungsreste bilden.

Gegenstand der vorliegenden Erfindung ist ebenfalls die Verwendung der reaktiven und verarbeitbaren Fluorpolymere zur Vernetzung, Bepfropfung oder weiteren polymeranalogen Umsetzungen.

### Beispiele

### Beispiel 1

In einem 36-1-Autoklaven wurden 21,2 kg entionisiertes Wasser und 35,2 g Ammoniumperfluoroctanoat vorgelegt. Darin wurden 18,3 g Oxalsäure-Dihydrat sowie 174,4 g Ammoniumoxalat-Monohydrat gelöst, wobei sich in der gesamte wäßrigen Vorlage ein pH-Wert von 4,4 einstellte. Der geschlossene Autoklav wurde viermal jeweils mit einem Stickstoffdruck von 10 bar beaufschlagt und anschließend auf Normaldruck entspannt. In den Autoklaven wurden 300 g Vinylidenfluorid und 392 g Hexafluorpropen gegeben und das Reaktionsgemisch unter Rühren auf 25°C erwärmt. Nach Erreichen dieser Temperatur betrug der Autoklaveninnendruck 9,7 bar. Die Polymerisation wurde eingeleitet durch die kontinuierliche Zugabe von 290 ml pro Stunde einer wäßrigen Lösung, die 20g/l Kaliumpermanganat enthielt. An der beginnenden Druckabnahme erkennbar, setzte die Polymerisation nach 38min ein. Zu diesem Zeitpunkt wurde die Dosiergeschwindigkeit der Kaliumpermanganatlösung auf 145 ml/h reduziert. Während der Polymerisation wurde ein Monomergemisch aus 60 Gew.% Vinylidenfluorid und 40 Gew.% Hexafluorpropen so nachgedrückt, daß der Autoklaveninnendruck konstant auf 9,4±0,2 bar gehalten wurde. Innerhalb einer Reaktionszeit von 190min wurden auf diese Weise insgesamt 3,6 kg Vinylidenfluorid und 2,4 kg Hexafluorpropen zugepumpt. Zur Beendigung der Polymerisation wurde die Permanganatdosierung abgebrochen, das nicht umgesetzte Monomergemisch durch Entspannung und Evakuierung aus dem Reaktor entfernt und der verbleibende Autoklaveninhalt abgekühlt. Es wurden 28,2 kg einer koagulatfreien wäßrigen Dispersion mit einem Feststoffgehalt von 22,3 % erhalten.

Der Latex wurde zum Koagulieren des Produktes langsam unter Rühren in 10kg einer wäßrigen Fällvorlage, in der 232g Calziumchlorid gelöst waren und die mit Salzsäure auf einen pH-Wert von 2-3 angesäuert wurde, gegossen. Das abfiltrierte Produkt wurde mit Wasser gewaschen und dann 24h bei 50°C in einem Vakuumtrockenschrank getrochnet, wobei 6,2 kg eines kautschukartigen Copolymers erhalten wurden. Durch ¹⁹F-NMR-Analysen wurde folgende Copolymerzusammensetzung bestimmt: 21,4 mol.% Hexafluorpropen, 78,6 mol.% Vinylidenfluorid.
Das Copolymer ist in THF und DMA-C (Dimethylacetamid) vollständig löslich. Die Mooney-Viskosität des Produktes, ML₁₊₁₀ (100°C) beträgt 117 Einheiten.

Durch gelchromatografische Analyse mit den gekoppelten Methoden von GPC und Viskosimeterie an einer Säulenkombination für M = 10³ ... 5x10⁷ g/mol in DMF unter Zusatz von 1 g/l LiBr bei 35°C und Auswertung mittels einer universellen Eichkurve nach BENOIT wurden die in Tabelle 1 angegebenen Molekulargewichte bestimmt.

Zur Herstellung eines radikalisch vernetzbaren und gut verarbeitbaren Fluorkautschuks wurden 150g des nach obiger Beschreibung hergestellten Kautschuks unter dem Einfluß der Scherung auf einem Standardwalzwerk (150x350) bei einem Walzenspalt von 0,15mm und einer Friktion von 1:1,33 mit 3,5g Trimethallylisocyanurat umgesetzt. Man beobachtet unmittelbar nach Zugabe des Trimethallylisocyanurats die Ausbildung eines glatteren Walzfells. Die Umsetzung wurde nach 2min Scherzeit beeendet. Das resultierende Trimethallylisocyanurathaltige Copolymer wurde ebenfalls gelchromatografisch untersucht. Die Ergebnisse sind in Tab. 1 aufgeführt.

Zur Herstellung einer vulkanisierfähigen Mischung wurden auf einem Zweiwalzenmischwerk 100 Gew.-Tle. des in oben beschriebener Weise modifizierten Kautschuks mit 30 Gew.-Tln. Ruß, 3 Gew.-Tln. Calciumhydroxid, 2 Gew.-Tln. Perkalink® 301/50 (Triallylisocyanurat, 50 %ig in inaktiven Füllstoffen) und 3 Gew.-Tln. Luperco® 130XL (2,5-Dimethyl-2,5-bis(tertiärburyl)-hex-3-in; 45 %ig in inaktiven Füllstoffen) zu einer vulkanisierfähigen Mischung compoundiert.

An dieser Mischung wurde durch Torsionsschubvulkameter-Messungen an einem Monsanto-Rheometer des Typs MDR 2000 E bei 170°C das Fließverhalten vor der Anvulkanisation sowie der Anstieg der Vernetzungsdichte anhand des Verlaufs der Drehmomente s' ( ∼ Speichermodul) bzw. s'' ( ∼ Verlustmodul) untersucht. Um die mechanischen Eigenschaften des vulkanisierten Produktes zu untersuchen, wurde die genannte vulkanisierfähige Mischung bei 170°C und 200bar in einer Form (1x10x10 mm) 30min druckvulkanisiert und anschließend in einem Umluftofen nachvulkanisiert (1 h bei 160°C, 1 h bei 170°C, 2 h bei 180°C und 20 h bei 200 °C). Die MDR-Ergebnisse (s'ₘᵢₙ bzw. s'ₘₐₓ = Drehmomente im Minimum, vor der Anvulkanisation, bzw. Maximum, nach 30min, sowie die entsprechenden Verlustfaktoren tanδ = s"/s') und mechanischen Eigenschaften sind in Tabelle 1 eingetragen.

### Beispiel 2

Aus 1943g des gemäß Beispiel 1 hergestellten Vinylidenfluorid/Hexafluorpropen-Copolymers und 38,9g Trimethallylisocyanurat wurde zunächst an einem Zweiwalzengummimischwerk ein kompaktes Walzfell hergestellt, das anschließend in einem 1500ml GK1,5E-3 Stempelkneter der Firma Brabender 10min geschert wurde. Die Innentemperatur stieg dabei bis auf 94°C an. Die anschließende Compoundierung und Vulkanisation erfolgte analog Beispiel 1, die Ergebnisse sind ebenso in Tabelle 1 aufgelistet.

**Tabelle 1**

| Beispiel | 1 | 2 | 3 | | | |
|---|---|---|---|---|---|---|
| M₁₀ | 380 | n.b. | 2970 | | | |
| Mₙ | 890 | n.b. | 6750 | | | |
| M_{w}[kg/mol] (Rohpolymer) | 4080 | n.b. | 25650 | | | |
| Scheraggregat | Walze | Stempelkneter | Walze | Walze | Walze | Walze |
| Scherzeit [min] | 2 | 10 | 2 | 4 | 6 | 8 |
| M₁₀ | 250 | n.b. | 300 | n.b. | n.b. | n.b. |
| Mₙ | 540 | n.b. | 730 | | | |
| M_{w} [kg/mol] (mit TMAiC¹⁾) | 2320 | n.b. | 3240 | | | |
| MDR/170°C | | | | | | |
| s'ₘᵢₙ [dNm] | 4,2 | 4,6 | 3,45 | 3,53 | 3,45 | 3,43 |
| tanδₘᵢₙ | 0,82 | 0,67 | 0,90 | 0,89 | 0,89 | 0,89 |
| tₛ ²⁾[min] | 1,16 | 1,8 | 1,38 | 1,35 | 1,38 | 1,34 |
| s'ₘₐₓ [dNm] | 22,0 | 20,2 | 20,8 | 20,54 | 20,31 | 19,8 |
| tanδₘₐₓ | 0,087 | 0,11 | 0,096 | 0,10 | 0,10 | 0,10 |
| M₅₀ | 1,57 | 1,90 | 1,51 | 1,54 | 1,43 | 1,54 |
| M₁₀₀ | 2,48 | 2,86 | 2,38 | 2,40 | 2,34 | 2,57 |
| Zugfestigkeit [N/mm²] | 23,8 | 21,5 | 24,0 | 22,7 | 23,8 | 23,9 |
| Bruchdehnung [%] | 261 | 271 | 322 | 302 | 296 | 313 |

| | | | | | | |
|---|---|---|---|---|---|---|
| ¹⁾ nach Modifizierung mit Trimethallylisocyanurat | | | | | | |
| ²⁾ Scorchzeit | | | | | | |
| n.b. nicht bestimmt | | | | | | |

### Beispiel 3

In einem 195-l-Autoklaven wurden 130 kg entionisiertes Wasser und 1,3 kg einer 31%-igen Lösung von Lithiumperfluoroctylsulfonat vorgelegt. Darin wurden 200 g Oxalsäure-Dihydrat gelöst und die gesamte Flotte auf pH 3 mit Lithiumhydroxid eingestellt. Der geschlossene Autoklav wurde mehrmals jeweils mit Stickstoff beaufschlagt und anschließend auf Normaldruck entspannt. In den Autoklaven wurden 1,7 kg Vinylidenfluorid, 2,05 kg Hexafluorpropen und 0,38 kg Tetrafluorethylen gegeben und das Reaktionsgemisch unter Rühren auf 25°C erwärmt. Nach Erreichen dieser Temperatur betrug der Autoklaveninnendruck 13,3 bar. Die Polymerisation wurde eingeleitet durch die kontinuierliche Zugabe einer wäßrigen Lösung, die 10g/l Kaliumpermanganat enthielt. Während der Polymerisation wurde ein Monomergemisch aus 54,25 Gew.% Vinylidenfluorid, 36,25 Gew.% Hexafluorpropen und 9,5 Gew.% Tetrafluorethylen so nachgedrückt, daß der Autoklaveninnendruck konstant auf 13,3 bar gehalten wurde. Innerhalb einer Gesamtlaufzeit von 2,1 Stunden wurden auf diese Weise insgesamt 21,7 kg Vinylidenfluorid, 14,5 kg Hexafluorpropen, 3,8 kg Tetrafluorethylen und 2,1 kg Kaliumpermanganat Lösung zugepumpt. Die Polymerisation wurde wie im Beispiel 1 beschrieben beendet. Es wurden 176,3 kg einer koagulatfreien wäßrigen Dispersion mit einem Feststoffgehalt von 24 % erhalten und analog Beispiel 1 gefällt.

Copolymerzusammensetzung: 17,6 mol.% Hexafluorpropen, 75,5 mol.% Vinylidenfluorid, 6,9 mol% Tetrafluorethylen.

Der Kautschuk wurde wie im Beispiel 1 beschrieben unter dem Einfluß der Scherung mit Trimethallylisocyanurat umgesetzt. Es wurden weitere mit Trimethallyisocyanurat modifizierte Copolymere derselben Bruttozusammensetzung hergestellt, indem die Scherzeit auf der Walze auf 4, 6 bzw. 8 min erhöht wurde. Die anschließende Compoundierung und Vulkanisation erfolgte analog Beispiel 1, die Ergebnisse sind ebenso in Tabelle 1 aufgelistet.

Die in Tabelle 1 aufgelisteten Ergebnisse zeigen, daß beide Rohkautschuke, die unterschiedliche Molekulargewichte besitzen, unter dem Einfluß der Scherung in Gegenwart von Trimethallylisocyanurat auf etwa dasselbe Niveau abgebaut werden und die Fähigkeit zum Netzwerkaufbau erlangen. Längere Scherzeiten führen bei den gewählten Bedingungen zu keinem weiteren Abbau oder zu keiner weiteren Erhöhung der Vernetzungsdichte.

### Vergleichsbeispiel 1-2

Die gemäß den Beispielen 1 und 2 hergestellten Rohpolymere wurden in analoger Weise mit Triallylisocyanurat anstelle von Trimethallylisocyanurat modifiziert. Die Ergebnisse der MDR-Messungen zeigen, daß die Compounds vor der Vulkanisation bereits hohe elastische Anteile besitzen (s'ₘᵢₙ hoch, tanδₘᵢₙ niedrig ) - also kein Abbau stattgefunden hat - und daß sie sehr schnell anvulkanisieren (tₛ niedrig). Derartige Compounds lassen sich äußerst schlecht zu Formkörpern verarbeiten.

**Tabelle 2**

| Ergebnisse von MDR-Messungen bei 170°C | | |
|---|---|---|
| Vergleichsbeispiel | 1 | 2 |
| s'ₘᵢₙ [dNm] | 10,36 | 11,0 |
| tanδₘᵢₙ | 0,387 | 0,325 |
| tₛ [min] | 0,6 | 0,5 |
| s'ₘₐₓ [dNm] | 22,6 | 19,9 |
| tanδₘₐₓ | 0,076 | 0,1 |

### Beispiele 4-7, Vergleichsbeispiel 3

In ähnlicher Weise wie in Beispiel 1 wurden Vinylidenfluorid/Hexafluorpropen-Copolymere derselben Zusammensetzung mit ca. 78 Mol-% Vinylidenfluorideinheiten im Copolymer hergestellt, die bereits vor der erfindungsgemäßen Modifizierung niedrigere Molekulargewichte im Vergleich zu den gemäß Beispiel 1-3 resultierenden besitzen. Die Ergebnisse der Modifizierung und Vulkanisation analog zu Beispiel 1 sind in Tabelle 3 aufgelistet.

**Tabelle 3**

| Beispiel | 4 | 5 | 6 | 7 | 3 |
|---|---|---|---|---|---|
| Vergleichsbeispiel | | | | | |
| M₁₀ | 230 | 210 | 150 | 60 | 45 |
| Mₙ | 600 | 550 | 390 | 130 | 100 |
| M_{w}[kg/mol] (Rohpolymer) | 2220 | 1730 | 1160 | 340 | 780 |
| MDR/170°C | | | | | |
| s'ₘᵢₙ [dNm] | 3,6 | 3,1 | 2,67 | 2,42 | 1,58 |
| tanδₘᵢₙ | 0,76 | 0,84 | 0,94 | 0,96 | 1,24 |
| tₛ [min] | 2,2 | 2,3 | 2,3 | 2,9 | 3,6 |
| s'ₘₐₓ [dNm] | 16,3 | 15,1 | 13,8 | 12,3 | 10,0 |
| tanδₘₐₓ | 0,14 | 0,17 | 0,19 | 0,2 | 0,254 |
| M₅₀ | 1,8 | 1,9 | 1,7 | 1,8 | 1,7 |
| M₁₀₀ | 2,6 | 2,9 | 2,4 | 2,5 | 2,1 |
| Zugfestigkeit [N/mm²] | 20,7 | 19,2 | 19,9 | 19,2 | 18,0 |
| Bruchdehnung [%] | 368 | 353 | 407 | 403 | 464 |

Die Gegenüberstellung der Beispiele 4-7 und des Vergleichsbeispiels 3 zeigt, daß Rohkautschuke mit M₁₀-Werten, die unter 50 kg/mol liegen, nicht mehr ausreichend vernetzungsfähig sind. Das Vulkanisat aus dem Vergleichsbeispiel 3 klebt zudem bei der Entnahme aus der heißen Form.

### Beispiele 8-14

An einem Standardwalzwerk (150x350) wurden bei einem Walzenspalt von 0,15mm und einer Friktion von 1:1,33 200g des gemäß Beispiel 3 hergestellten Rohkautschuks zunächst 2min bis zur Fellbildung allein geschert und anschließend unmittelbar nacheinander 6g Percalink® (= 3g TAiC) und die in Tabelle 4 angegebenen Mengen weiterer Verbindungen des Typs B) und gegebenenfalls C) zugegeben und 20min geschert. Nach jeweils 5 und 10min Scherzeit wurden bei den Versuchen 9 und 12 Proben für Torsionsschubvulkametermessungen entnommen. Die Ergebnisse der Drehmomentmessungen (s') an den Compounds nach 5, 10 und 20min Scherzeit sind in Tabelle 4 zusammengestellt.

**Tabelle 4**

| Beispiel | 9 | 12 |
|---|---|---|
| Zusatz [g] | Limonen 4 | Ascorbinsäure 2 |
| Scherzeit [min] | s' (MDR/170°C) [dNm] | |
| 0 | 16,8 | 16,8 |
| 5 | 8,4 | 9,7 |
| 10 | 4,1 | 6,1 |
| 20 | 1,4 | 2,5 |

Aus jeweils 150g der in oben beschriebener Weise hergestellten Compounds wurden durch weitere Einarbeitung von 45g Ruß, 4,5g Calciumhydroxid und 4,5g Luperco® 130 XL (2,5-Dimethyl-2,5-bis(tertiärbutyl)-hex-3-in; 45 %ig in inaktiven Füllstoffen) vulkanisierfähige Mischungen hergestellt und analog den bisherigen Beispielen vulkanisiert und untersucht, Tabelle 5.

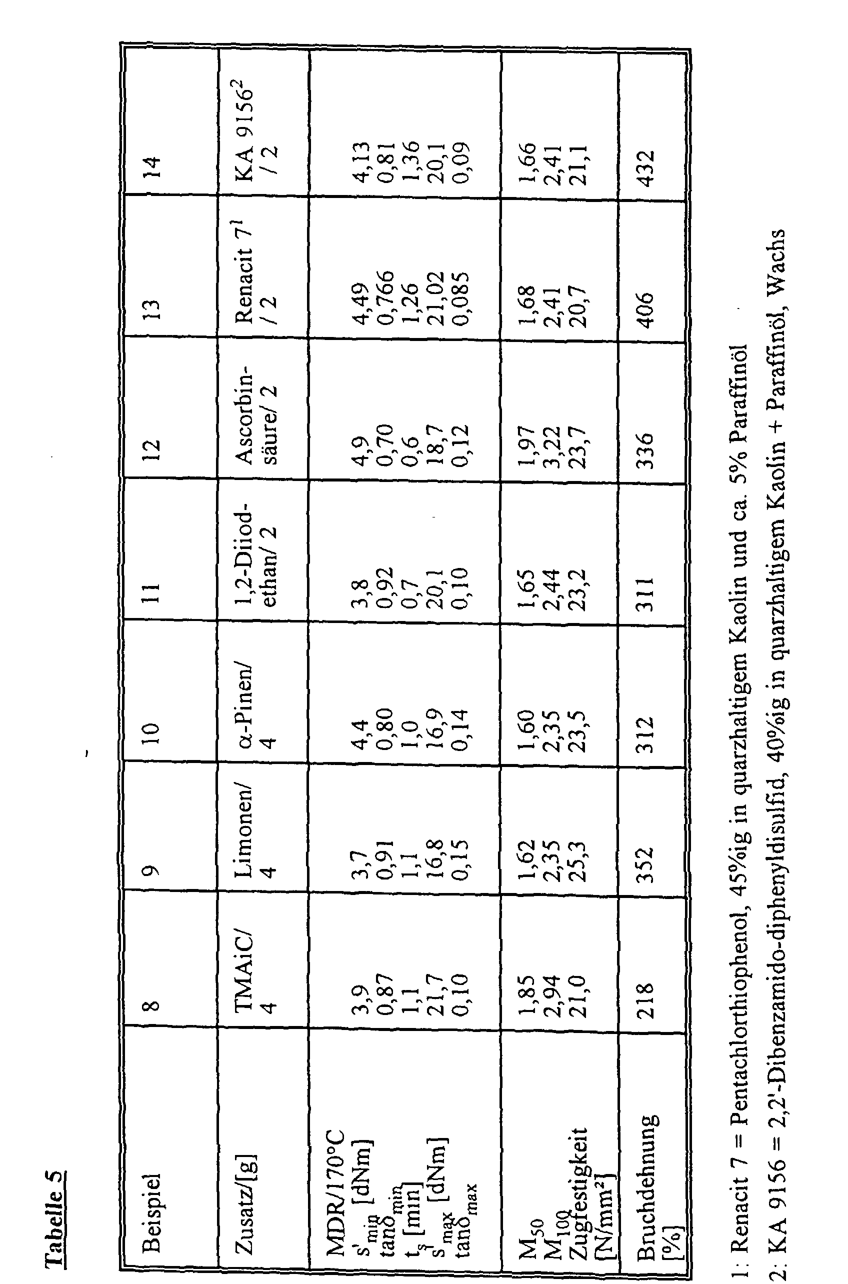

## Patentansprüche

1. Reaktive und verarbeitbare Fluorpolymere, erhältlich durch mechanische Scherung von
- Fluorpolymeren A), die aus polymerisierten Monomereinheiten von
ein oder mehreren fluorierten, gegebenenfalls substituierten Alkenen mit 2 bis 8 Kohlenstoffatomen und gegebenenfalls
perfluorierten Vinylethern, nicht fluorierten Olefinen und/oder nicht fluorierten Vinylestern bestehen und
- 0,3 bis 7 % von Verbindungen B), die
eine zur Addition an polymere Radikalbruchstücke befähigte Doppelbindung (I) sowie
Π-Elektronensysteme, die entweder selbst in Konjugation zu der Doppelbindung (I) stehen oder in Allyl- oder Benzylstellung leicht übertragbare Wasserstoffatome besitzen sowie
gegebenenfalls weitere Doppelbindungen oder reaktive Gruppen besitzen und
gegebenenfalls weiteren Hilfsstoffen (C).

2. Reaktive und verarbeitbare Fluorpolymere nach Anspruch 1, dadurch gekennzeichnet, daß diese mindestens eine Verbindung B) aus der Gruppe
R^{1a}R²C=CR^{1b}-CH₂-Z(R³ ₚR⁴ ₘR⁵ ₙ) (1)
R^{1a}R²C=CR^{1b}-Z(R³ ₚR⁴ ₘR⁵ ₙ) (2) 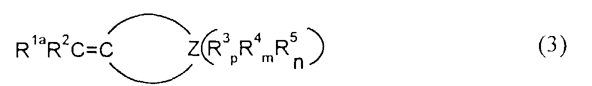 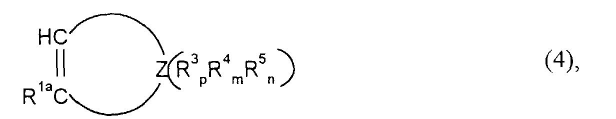
die einzeln oder im Gemisch vorliegen können enthalten,
wobei
R^{1a} und R^{1b} unabhängig voneinander H, F, oder C₁-C₆-Alkyl-Resten,
R² H oder F entsprechen;
Z ein acyclischer oder cyclischer aliphatischer oder aromatischer organischer oder anorganischer Rest ist, der als R³R⁴R⁵ weitere olefinische Doppelbindungen und/oder reaktive Gruppen trägt,
wobei p, m und n Zahlenwerte von 0 bis 3 annehmen können und
die Summe aus p + m + n maximal 3 beträgt und R³, R⁴ und R⁵ voneinander verschieden oder gleich sein können, und die Bedeutung von weiteren olefinischen und/oder reaktiven Gruppen haben.

3. Reaktive und verarbeitbare Fluorpolymere nach einem der Ansprüche 1 bis 2, dadurch gekennzeichnet, daß als Verbindungen B) der Gruppen 1 bis 4 Di- oder Triallyl- oder -methallylester mehrwertiger organischer oder anorganischer Säuren und/oder Di- oder Triallyl- oder -methallylether zwei oder dreiwertiger Alkohole inclusive Acetale und/oder acyclische oder cyclische Di- oder Triene und/oder Verbindungen, die neben einer oder mehreren Doppelbindungen gespannte Ringe enthalten und/oder am Phenylring substituierte Styrol- oder α-Methylstyrolderivate sind.

4. Reaktive und verarbeitbare Fluorpolymere nach einem der Ansprüche 1 bis 3, dadurch gekennzeichnet, daß als Verbindungen B) eine Kombination aus Triallylisocyanurat oder Triallylcyanurat mit Trimethallylisocyanurat und/oder α-Pinen, Limonen, Myrcen und/oder Ethylidennorbornen ist.

5. Reaktive und verarbeitbare Fluorpolymere nach einem der Ansprüche 1 bis 4, dadurch gekennzeichnet, daß die Hilfsstoffe C) leicht oxydierbare hydroxy- und carboxygruppenhaltige organische Verbindungen, klassische Mastizierhilfsmittel, als Sauerstoffüberträger wirkende Eisen-, Kupfer-, Kobalt-, Nickel- oder Cromkomplexe des Phthalocyanins oder Acetylacetonats, iod- und/oder bromhaltige Verbindungen, Alterungsschutzmittel oder Radikalinhibitoren oder Gemische daraus sind.

6. Reaktive und verarbeitbare Fluorpolymere nach Anspruch 5, dadurch gekennzeichnet, daß die Hilfsstoffe C) Oxalsäure, Bernsteinsäure, Apfelsäure, Weinsäure, Zitronensäure, Ascorbinsäure, Folsäure sowie Glycol, Glycerin, Pentachlorthiophenol, dessen Zinksalz oder 2,2'-Dibenzamidodiphenyldisulfid sowie Eisen-, Kupfer-, Kobalt-, Nickel- oder Chromkomplexe des Phthalocyanins oder Acetylacetonats, Benzochinon, Pyrogallol (2,3-Dihydroxyphenol), 1,5-Di-t-butyl-p-kresol oder N-substituierte p-Phenylendiamine oder Gemische daraus sind.

7. Reaktive und verarbeitbare Fluorpolymere nach einem der Ansprüche 1 bis 6, dadurch gekennzeichnet, daß die Fluorpolymere 0,1 bis 5 Teile Hilfsstoffe C) pro 100 Teile Fluorpolymer A) enthalten.

8. Reaktive und verarbeitbare Fluorpolymere nach einem der Ansprüche 1 bis 7, dadurch gekennzeichnet, daß diese gegenüber den Fluorpolymeren A) um mindestens 1/3 verringerte Gewichtsmittel der Molekulargewichte besitzen.

9. Reaktive und verarbeitbare Fluorpolymere nach einem der Ansprüche 1 bis 8, dadurch gekennzeichnet, daß das Fluorpolymer A) ein Kautschuk ist mit M₁₀ >50 kg/Mol.

10. Verfahren zur Herstellung von reaktiven und verarbeitbaren Fluorpolymeren nach einem der Ansprüche 1 bis 9, dadurch gekennzeichnet, daß die Fluorpolymere A) mit den Verbindungen B) und gegebenenfalls Hilfsstoffen C) unter dem Einfluß mechanischer Scherung umgesetzt werden.

11. Verfahren nach Anspruch 10, dadurch gekennzeichnet, daß die Verarbeitungstemperatur oberhalb der Glastemperatur des Fluorpolymers A) liegt und die Scherdauer ≥ 1 min beträgt.

12. Verfahren zur Herstellung von vernetzten, bepfropften oder modifizierten Fluorpolymeren, dadurch gekennzeichnet, daß reaktive und verarbeitbare Fluorpolymere, erhältlich durch mechanische Scherung von
- Fluorpolymeren A), die aus polymerisierten Monomereinheiten von
ein oder mehreren fluorierten, gegebenenfalls substituierten Alkenen mit 2 bis 8 Kohlenstoffatomen und gegebenenfalls
perfluorierten Vinylethern, nicht fluorierten Olefinen und/oder nicht fluorierten Vinylestern bestehen und
- 0,3 bis 7 %von Verbindungen B) die
eine zur Addition an polymere Radikalbruchstücke befähigte Doppelbindung (I) sowie
II-Elektronensysteme, die entweder selbst in Konjugation zu der Doppelbindung (I) stehen oder in Allyl- oder Benzylstellung leicht übertragbare Wasserstoffatome besitzen sowie
gegebenenfalls weitere Doppelbindungen oder reaktive Gruppen besitzen und
gegebenenfalls weiteren Hilfsstoffen (C)
in radikalischen Additions-, nucleophilen oder elektrophilen Substitutions- oder Additionsreaktionen eingesetzt werden.

13. Verwendung der reaktiven und verarbeitbaren Fluorpolymeren nach einem der Ansprüche 1 bis 10 zur Vernetzung, Bepfropfung oder weiteren polymeranalogen Umsetzungen.

## Claims

1. Reactive and processable fluoropolymers, obtainable by mechanical shearing of
- fluoropolymers A), which consist of polymerised monomer units of
one or more fluorinated, optionally substituted, alkenes with 2 to 8 carbon atoms and optionally
perfluorinated vinyl ethers, non-fluorinated olefins and/or non-fluorinated vinyl esters and
- 0.3 to 7 % of compounds B), which possess
a double bond (I) capable of adding to polymeric radical fragments and
Π-electron systems which are either actually conjugated with double bond (I) or have readily transferrable hydrogen atoms in an allyl or benzyl position and
optionally further double bonds or reactive groups and
optionally further auxiliary substances (C).

2. Reactive and processable fluoropolymers according to Claim 1, characterised in that these contain at least one compound B) from the group
R^{1a}R²C=CR^{1b}-CH₂-Z(R³ ₚR⁴ ₘR⁵ ₙ) (1)
R^{1a}R²C=CR^{1b}-Z(R³ ₚR⁴ ₘR⁵ ₙ) (2) 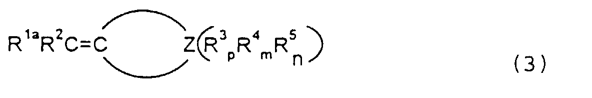 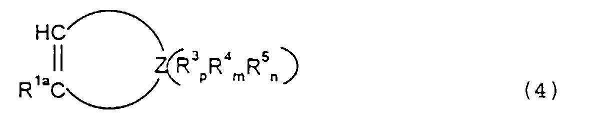
which may be present separately or in a mixture,
wherein
R^{1a} and R^{1b}, independently of each other, represent H, F or a C₁-C₆-alkyl group,
R² represents H or F;
Z represents an acyclic or cyclic, aliphatic or aromatic, organic or inorganic group, which carries further olefinic double bonds and/or reactive groups represented by R³R⁴R⁵,
wherein p, m and n may assume numerical values from 0 to 3 and
the sum of p + m + n is a maximum of 3 and R³, R⁴ and R⁵ may be identical or different from each other and are defined as further olefinic and/or reactive groups.

3. Reactive and processable fluoropolymers according to one of Claims 1 to 2, characterised in that the compounds B) from groups 1 to 4 are diallyl or triallyl or methallyl esters of polybasic organic or inorganic acids and/or diallyl or triallyl or methallyl ethers of dihydric or trihydric alcohols including acetals and/or acyclic or cyclic dienes or trienes and/or compounds which contain a strained ring as well as one or more double bonds and/or styrene or α-methylstyrene derivatives with substituents in the phenyl ring.

4. Reactive and processable fluoropolymers according to one of Claims 1 to 3, characterised in that compounds B) are a combination of triallyl isocyanurate or trially cyanurate with trimethallyl isocyanurate and/or α-pinene, limonene, myrcene and/or ethylidenenorbornene.

5. Reactive and processable fluoropolymers according to one of Claims 1 to 4, characterised in that auxiliary substances C) are readily oxidisable hydroxyl and carboxyl-containing organic compounds, classical mastication agents, iron, copper, cobalt, nickel or chromium complexes of phthalocyanine or acetylacetonate which act as oxygen transferring agents, iodine and/or bromine-containing compounds, antioxidants or radical inhibitors or mixtures thereof.

6. Reactive and processable fluoropolymers according to Claim 5, characterised in that auxiliary substances C) are oxalic acid, succinic acid, malic acid, tartaric acid, citric acid, ascorbic acid, folic acid and glycol, glycerine, pentachlorothiophenol, its zinc salt or 2,2'-dibenzamido-diphenyl disulphide and iron, copper, cobalt, nickel or chromium complexes of phthalocyanine or acetylacetonate, benzoquinone, pyrogallol (2,3-dihydroxyphenol), 1,5-di-t-butyl-p-cresol or N-substituted p-phenylenediamines or mixtures thereof.

7. Reactive and processable fluoropolymers according to one of Claims 1 to 6, characterised in that the fluoropolymers contain 0.1 to 5 parts of auxiliary substances C) per 100 parts of fluoropolymer A).

8. Reactive and processable fluoropolymers according to one of Claims 1 to 7, characterised in that these have molecular weights which are reduced by at least 1/3 when compared with fluoropolymers A).

9. Reactive and processable fluoropolymers according to one of Claims 1 to 8, characterised in that fluoropolymer A) is a rubber with M₁₀ > 50 kg/mol.

10. A process for preparing reactive and processable fluoropolymers according to one of Claims 1 to 9, characterised in that fluoropolymers A) are reacted with compounds B) and optionally auxiliary substances C) under the effects of mechanical shearing.

11. A process according to Claim 10, characterised in that the processing temperature is above the glass transition temperature of fluoropolymer A) and the shearing time is ≥ 1 min.

12. A process for preparing cross-linked, grafted or modified fluoropolymers, characterised in that reactive and processable fluoropolymers, obtainable by mechanical shearing of
- fluoropolymers A), which consist of polymerised monomer units of
one or more fluorinated, optionally substituted alkenes with 2 to 8 carbon atoms and optionally
perfluorinated vinyl ethers, non-fluorinated olefins and/or non-fluorinated vinyl esters and
- 0.3 to 7 % of compounds B), which possess
a double bond (I) capable of adding to polymeric radical fragments and
Π-electron systems which are either actually conjugated with double bond (I) or have readily transferrable hydrogen atoms in an allyl or benzyl position and
optionally further double bonds or reactive groups and
optionally further auxiliary substances (C)
are used in radical addition or nucleophilic or electrophilic substitution or addition reactions.

13. Use of the reactive and processable fluoropolymers according to one of Claims 1 to 10 for cross-linking, grafting or other polymer-analogous reactions.

## Revendications

1. Polymères fluorés réactifs et traitables, que l'on obtient par cisaillement mécanique de
- polymères fluorés A) qui sont constitués par des unités monomères polymérisées
d'un ou de plusieurs alcènes fluorés éventuellement substitués contenant de 2 à 8 atomes de carbone et, le cas échéant,
d'éthers vinyliques perfluorés, d'oléfines non fluorées et/ou d'esters vinyliques non fluorés, et
- à concurrence de 0,3 à 7%, de composés B) qui possèdent
- une liaison double (I) apte à l'addition à des fragments de radicaux polymères, ainsi que
- des systèmes d'électrons Π qui, soit se trouvent eux-mêmes en conjugaison à la liaison double (I), soit possèdent des atomes d'hydrogène aisément transférables en position allyle ou benzyle, et
- qui possèdent éventuellement d'autres liaisons doubles ou d'autres groupes réactifs, et
- éventuellement d'autres substances auxiliaires (C).

2. Polymères fluorés réactifs et traitables selon la revendication 1, caractérisés en ce qu'ils contiennent au moins un composé B) choisi parmi les groupes
R^{1a}R²C=CR^{1b}-CH₂-Z(R³ ₚR⁴ ₘR⁵ ₘ) (1)
R^{1a}R²C=CR^{1b}-Z(R³ ₚR⁴ ₘR⁵ ₘ) (2) 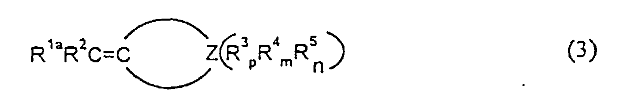 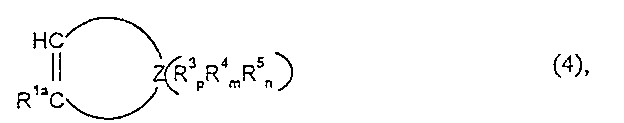
qui peuvent être présents individuellement ou en mélange,
dans
lesquels R^{1a} et R^{1b} représentent, indépendamment l'un de l'autre, H, F ou des radicaux alkyle en C₁-C₆,
R² représente H ou F,
Z représente un radical inorganique ou organique aliphatique ou aromatique acyclique ou cyclique qui porte, à titre de R³R⁴R⁵, d'autres liaisons doubles oléfiniques et/ou d'autres groupes réactifs,
p, m et n pouvant prendre des valeurs numériques de 0 à 3, et
la somme de p + m + n s'élevant au maximum à 3 et R³, R⁴ et R⁵ pouvant être différents l'un de l'autre ou identiques et possédant la signification d'autres groupes oléfiniques et/ou réactifs.

3. Polymères fluorés réactifs et traitables selon l'une quelconque des revendications 1 à 2, caractérisés en ce qu'on met en oeuvre, comme composés B) des groupes 1 à 4, des esters di- ou tri-allyliques ou -méthallyliques d'acides organiques ou inorganiques polyvalents et/ou des éthers di- ou tri-allyliques ou -méthallyliques d'alcools bivalents ou trivalents, y compris des acétals, et/ou des di- ou triènes acycliques ou cycliques et/ou des composés qui contiennent, outre une ou plusieurs liaisons doubles, des noyaux sous tension et/ou qui sont des dérivés du styrène ou de l'α-méthylstyrène substitués sur le noyau phényle.

4. Polymères fluorés réactifs et traitables selon l'une quelconque des revendications 1 à 3, caractérisés en ce qu'on met en oeuvre, comme composés B), une combinaison de triallylisocyanurate ou de triallylcyanurate avec du triméthallylisocyanurate et/ou de l'α-pinène, du limonène, du myrcène et/ou de l'éthylidènenorbornène.

5. Polymères fluorés réactifs et traitables selon l'une quelconque des revendications 1 à 4, caractérisés en ce que les adjuvants C) sont des composés organiques aisément oxydables contenant des groupes hydroxyle et carboxyle; des adjuvants de mastication classiques, des complexes du fer, du cuivre, du cobalt, du nickel ou du chrome de la phtalocyanine ou de l'acétylacétonate faisant office d'agents transférant l'oxygène; des composés iodés et/ou bromés; des agents de protection contre le vieillissement ou des inhibiteurs radicalaires; ou encore des mélanges de ces adjuvants.

6. Polymères fluorés réactifs et traitables selon la revendication 5, caractérisés en ce que les adjuvants C) sont l'acide oxalique, l'acide succinique, l'acide malique, l'acide tartrique, l'acide citrique, l'acide ascorbique, l'acide folique, ainsi que le glycol, le glycérol, le pentachlorothiophénol, son sel de zinc, ou encore le 2,2'-dibenzamidodiphényldisulfure, ainsi que des complexes du fer, du cuivre, du cobalt, du nickel ou du chrome de la phtalocyanine ou de l'acétylacétonate, la benzoquinone, le pyrogallol (2, 3-dihydroxyphénol), le 1, 5-di-t-butyl-p-crésol ou des p-phénylènediamines substituées sur l'atome d'azote ou encore des mélanges de ces adjuvants.

7. Polymères fluorés réactifs et traitables selon l'une quelconque des revendications 1 à 6, caractérisés en ce que les polymères fluorés contiennent de 0,1 à 5 parties d'adjuvants C) par 100 parties de polymère fluoré A).

8. Polymères fluorés réactifs et traitables selon l'une quelconque des revendications 1 à 7, caractérisés en ce que ces derniers possèdent, par rapport aux polymères fluorés A), des moyennes pondérales des poids moléculaires réduites d'au moins 1/3.

9. Polymères fluorés réactifs et traitables selon l'une quelconque des revendications 1 à 8, caractérisés en ce que le polymère fluoré A) est un caoutchouc possédant une valeur M₁₀ > 50 kg/mole.

10. Procédé pour la préparation de polymères fluorés réactifs et traitables selon l'une quelconque des revendications 1 à 9, caractérisé en ce qu'on fait réagir les polymères fluorés A) avec les composés B) et éventuellement des adjuvants C) sous l'influence d'un cisaillement mécanique.

11. Procédé selon la revendication 10, caractérisé en ce que la température de traitement est supérieure à la température de transition vitreuse du polymère fluoré A) et la durée de cisaillement est ≥ 1 minute.

12. Procédé pour la préparation de polymères fluorés réticulés, greffés ou modifiés, caractérisé en ce qu'on met en oeuvre des polymères fluorés réactifs et traitables, que l'on obtient par cisaillement mécanique de
- polymères fluorés A) qui sont constitués par des unités monomères polymérisées
d'un ou de plusieurs alcènes fluorés éventuellement substitués contenant de 2 à 8 atomes de carbone et, le cas échéant,
d'éthers vinyliques perfluorés, d'oléfines non fluorées et/ou d'esters vinyliques non fluorés, et
- à concurrence de 0,3 à 7%, de composés B) qui possèdent
- une liaison double (I) apte à l'addition à des fragments de radicaux polymères, ainsi que
- des systèmes d'électrons Π qui, soit se trouvent eux-mêmes en conjugaison à la liaison double (I), soit possèdent des atomes d'hydrogène aisément transférables en position allyle ou benzyle, et
- qui possèdent éventuellement d'autres liaisons doubles ou d'autres groupes réactifs, et
- éventuellement d'autres substances auxiliaires (C),
dans des réactions d'addition radicalaire, de substitution ou d'addition nucléophile ou électrophile.

13. Utilisation des polymères fluorés réactifs et traitables selon l'une quelconque des revendications 1 à 10, pour la réticulation, le greffage ou d'autres mises en réaction analogues à des réactions sur des polymères.
